# EUROPEAN PATENT APPLICATION

(11) **EP 4 635 626 A1**
(43) Date of publication of application: **22.10.2025**
(21) Application number: 24170384.2
(22) Date of filing: 16.04.2024
(51) Int. Cl.: B01J 47/024, H01M 8/04044

(54) **ION EXCHANGER FILTER DEVICE AND ION EXCHANGER CARTRIDGE**

(71) Applicant: MANN+HUMMEL GmbH, 71636 Ludwigsburg (DE)
(72) Inventor: PFLÜGER, Frank, 71636 Ludwigsburg (DE); WILDERMUTH, Andreas, 71636 Ludwigsburg (DE); BEH, Oliver, 71636 Ludwigsburg (DE)
(74) Representative: Mann + Hummel Intellectual Property

(57) **Abstract**

An ion exchanger filter device (100), in particular for a fuel cell system, comprises a housing (102) comprising a central tube (130) extending in an axial direction (80), and at least two receiving compartments (140) respectively enclosing at least two ion exchanger cartridges (10), the at least two receiving compartments (140) being arranged circumferentially and in fluid connection with the central tube (130), each of the at least two ion exchanger cartridges (10) comprising a cartridge container (14) with a circumferentially extending wall (32), and the circumferentially extending wall (32) comprising one or more outflow ports (18) distributed at or about a circumference of the circumferentially extending wall (32). The ion exchanger filter device (100) further comprises a connector (150) comprising at least one inflow opening (104) and at least one outflow opening (106) for a medium.

## Description

### Technical Field

Embodiments relate to an ion exchanger filter device, in particular for a fuel cell system, as well as to an ion exchanger cartridge for an ion exchanger filter device.

### Background Art

Fuel cells have an electrical efficiency of approximately 50%. The remainder of the energy is obtained as heat. The latter must be discharged in order to keep the efficiency of the fuel cell as high as possible. For this purpose, a cooling medium flows about the cells. In case the cooling medium is electrically conductive, short circuiting between the cells may occur. Therefore, a deionization by means of an ion exchanger is necessary. Since the cooling liquid must fulfill also further properties such as antifreezing, mixtures are used here, e.g. deionized water and mono-ethylene glycol in a ratio of 50:50.

EP 3160614 A1 discloses a filter device that has a hollow cylindrical filter element in a filter housing, which has end disks on the end faces, with a flow opening being introduced into one end disk. For the positive fastening of a pipe connection piece communicating with the flow opening, a radially directed collar is arranged on a cover, which forms an axial stop for the pipe connection piece.

WO 2021/170377 A1 discloses an ion exchanger filter device is proposed, in particular for a fuel cell system, with a housing in which an ion exchanger cartridge is received, wherein the housing comprises at least one inflow opening and at least one outflow opening for a medium, and wherein the at least one inflow opening and the at least one outflow opening penetrate a wall of the housing. A flow path extends from the inflow opening through the ion exchanger cartridge to the outflow opening. The ion exchanger cartridge comprises a cartridge container with a receptacle that is filled with ion exchanger material and is delimited by a circumferentially extending wall that comprises one or a plurality of outflow ports distributed at or about its circumference.

### Summary

An object of the embodiments is to provide an improved ion exchanger filter device, in particular for a fuel cell system.

A further object of the embodiments is to provide an ion exchanger cartridge for an improved ion exchanger filter device.

According to an aspect of the embodiments the object is achieved by an ion exchanger filter device, in particular for a fuel cell system, comprising a housing comprising a central tube extending in an axial direction, and at least two receiving compartments respectively enclosing at least two ion exchanger cartridges, the at least two receiving compartments being arranged circumferentially and in fluid connection with the central tube, each of the at least two ion exchanger cartridges comprising a cartridge container with a circumferentially extending wall enclosing a receptacle filled with an ion exchanger material, and the circumferentially extending wall comprising one or more outflow ports distributed at or about a circumference of the circumferentially extending wall. The ion exchanger filter device further comprises a connector comprising at least one inflow opening and at least one outflow opening for a medium, the connector being in fluid connection to a central opening of the housing. The medium flows through the at least two ion exchanger cartridges in parallel, and a flow path of the medium through each of the at least two ion exchanger cartridges has approximately the same length from the at least one inflow opening through the ion exchanger cartridges to the central tube and the at least one outflow opening.

According to a further aspect of the embodiments the further object is achieved by an ion exchanger cartridge for the ion exchanger filter device comprising the cartridge container comprising the circumferentially extending wall enclosing the receptacle filled with the ion exchanger material, the circumferentially extending wall comprising the one or more outflow ports distributed at or about the circumference of the circumferentially extending wall. The ion exchanger cartridge further comprises a cover configured as one piece together with the circumferentially extending wall or connected with form fit or material fusion to the circumferentially extending wall, the cover being configured to cover the housing of the ion exchanger filter device configured to receive the ion exchanger cartridge, and the cover comprising an overlap region overlapping in the axial direction the one or more outflow ports and forming an annular gap. The flow path of the medium through the ion exchanger cartridge comprises a deflection within the annular gap downstream of the one or more outflow ports.

Advantageous embodiments are described in the dependent claims, the description and the drawings.

These embodiments describe a high capacity ion exchanger filter device with at least two standard ion exchanger cartridges in a housing with at least two compartments for the ion exchanger cartridges accommodated parallel to each other and with a central removable connector concentrating the compartments.

The higher capacity results from the at least two ion exchanger cartridges instead of a single one. The compact design allows the use of minimized installation spaces.

Mounting means as a holder allows the ion exchanger filter device to be mounted and unmounted.

In a favorable embodiment three ion exchanger cartridges may be accommodated in a triangular shaped housing. Thus, the ion exchanger filter device offers advantageously three times the capacity of ion exchange capability, but less space is required in comparison to using three separate ion exchanger cartridges.

Advantageously, standard ion exchanger cartridges may be used offering a standard solution with multiplied value creation. Use of the ion exchanger filter device may particularly be favorable for truck application because of the high ion exchange capacity.

The compact design of the housing of the ion exchange device is particularly favored because of the concentric inflow and outflow channels of the medium. Inflow of the medium is possible from a side of the housing through the inflow opening of the connector whereas outflow of the medium may be along a central axis. The connector may be designed as concentric pipes for inflow and outflow of the medium.

The ion exchanger cartridges are flown through in a parallel way whereas the flow path through all ion exchanger cartridges have approximately the same length. Therefore even flow path for each ion exchanger cartridge and thus even pressure loss of the medium may advantageously be guaranteed.

The ion exchanger material being enclosed in the cartridges may favorably be provided as granulate. Therefore no change in pressure loss of the medium during passage through the ion exchanger cartridge may be expected.

Advantageously, the proposed ion exchanger filter device may also be used for filtering a cooling medium of electric charging stations.

According to a favorable embodiment of the ion exchanger filter device, the central tube may comprise outflow ports arranged in a wall of the central tube as a fluid connection of the at least two receiving compartments with the central tube. Thus, the medium flow may advantageously be provided after having passed the ion exchanger material from the compartments to the central tube for central outflow out of the housing.

According to a favorable embodiment of the ion exchanger filter device, the connector may further include a concentric inflow channel and a concentric outflow channel for the medium to and from the housing. The concentric outflow channel may be in fluid connection to the central tube, the at least two receiving compartments may include inflow ports arranged in a wall of the at least two receiving compartments, and the concentric inflow channel of the connector may be in fluid connection to the inflow ports. By this way, the medium can flow from the inflow channel of the connector through the inflow ports to enter the ion exchanger cartridge and may leave the housing through the central tube to the outflow channel of the connector.

According to a favorable embodiment of the ion exchanger filter device, the concentric inflow channel and the concentric outflow channel may be arranged as concentric pipes, the concentric inflow channel may be in fluid connection to the at least one inflow opening, and the concentric outflow channel may be in fluid connection to the at least one outflow opening. Advantageously, a very compact design of the housing of the ion exchanger filter device may be enabled.

According to a favorable embodiment of the ion exchanger filter device, the connector may be removable from the central opening of the housing. The connector may be sealed to the central opening of the housing by a first circumferentially extending seal, and/or may be sealed to the central tube by a second circumferentially extending seal. Thus, housing and connector may favorably be manufactured separately and mounted in a final assembly step.

According to a favorable embodiment of the ion exchanger filter device, the connector may be fixed to the central opening of the housing by an at least partly circumferentially extending retaining spring. Reliable mounting of the connector to the central tube of the housing is favorably enabled.

According to a favorable embodiment of the ion exchanger filter device, the flow path may comprise at least one deflection downstream of the one or more outflow ports of the least one inflow opening. The deflection of the flow as it enters the annular gap around the cartridge can have a homogenizing effect on the flow so that the entire ion exchanger material is used up evenly and no dead spaces form with regard to the flow.

According to a favorable embodiment of the ion exchanger filter device, the one or more outflow ports, in relation to a direction of gravity in an intended mounting position of the ion exchanger filter device, may be arranged in the axial direction above the at least one outflow opening. An arrangement of the outflow port high up on the housing of the ion exchanger filter device with respect to the direction of gravity can in turn ensure that the ion exchanger filter arrangement can be vented sufficiently well.

The ion exchanger cartridge can be inserted with the overlap region easily into the housing and connected thereto. Due to the overlap, the outflow port can be arranged at the upper end of the receptacle of the cartridge container so that an effective utilization of the ion exchanger material is provided. The filtered medium can be guided through the outlet port in a gap between overlap region and wall of the cartridge container to the outflow opening of the housing.

A gap, in particular an annular gap, is formed between the overlap region and the wall. In the ion exchanger filter device according to the embodiments, the installation space can be beneficially utilized because ion exchanger material can be arranged also above the outlet opening of the ion exchanger filter device. The cooling medium flows then to the inner side of the cover where it is deflected and guided through the annular gap between cartridge container and cover of the ion exchanger filter device opposite to the prior flow direction back to the outlet opening. The annular gap acts in this context in a homogenizing manner on the flow so that the entire ion exchanger material is used up uniformly and no dead spaces are formed in regard to the flow.

An improvement of the manufacturing process of the ion exchanger cartridge can advantageously be obtained by a cartridge container with insert-molded screen fabric, wherein the screen fabric covers the inflow port as well as the at least one outflow port of the ion exchanger cartridge. Advantage of this design is that only at one component insert molding is required. In this context, the inflow port is ideally oriented vertically and the at least one outflow port is radially oriented in relation to an axial direction of the ion exchanger cartridge.

The closure of the cartridge container filled with the ion exchanger material such as, for example, ion exchanger resin, can be realized directly with the cover of the housing of the ion exchanger filter device so that this component group can be reduced by one component.

In this manner, the ion exchanger cartridge can be produced inexpensively. Also, an effective sealing action of the interior of the ion exchanger filter device against the environment can be realized. In this way, the separation between filtered and unfiltered medium is possible in an effective manner.

According to a favorable embodiment of the ion exchanger cartridge, the overlap region may be embodied as a connection section configured to connect the ion exchanger cartridge to the housing of the ion exchanger filter device, the connection section being a thread section. In particular, the thread section may comprise an outer thread. In particular, the overlap region can comprise a thread section which interacts with a counter thread arranged at the housing of the ion exchanger filter device.

### Brief Description of Drawings

The embodiments together with the above-mentioned and other objects and advantages may best be understood from the following detailed description of the embodiments, but not restricted to the embodiments.
Fig. 1 is an ion exchanger filter device, in particular for a fuel cell system, according to embodiments in isometric view.
Fig. 2 is a top view of the ion exchanger filter device according to Fig. 1.
Fig. 3 is a sectional view of the ion exchanger filter device.
Fig. 4 is another sectional view of the ion exchanger filter device.
Fig. 5 is a bottom view of the housing of the ion exchanger filter device.

### Description of Embodiments

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

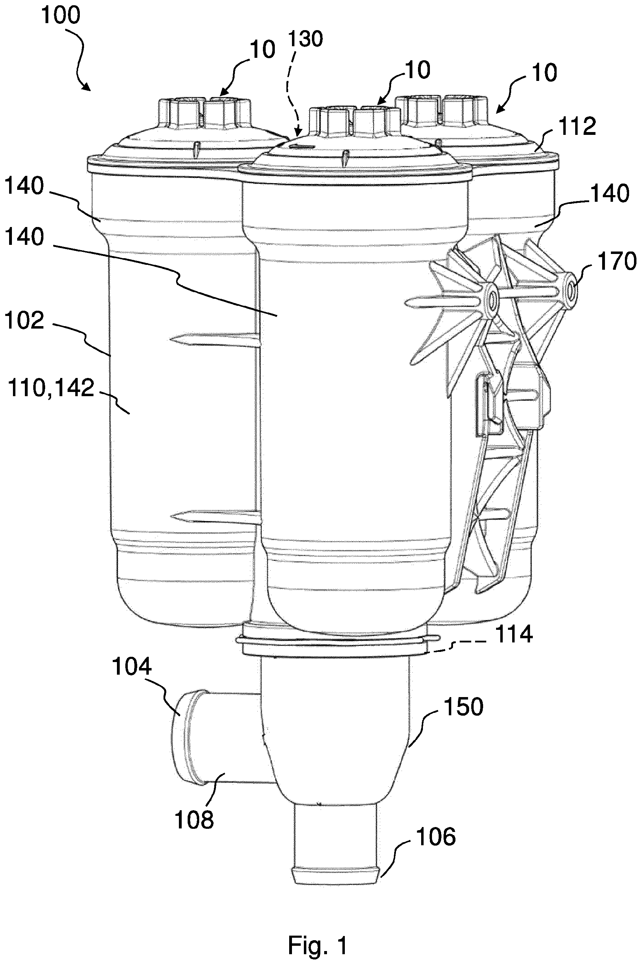

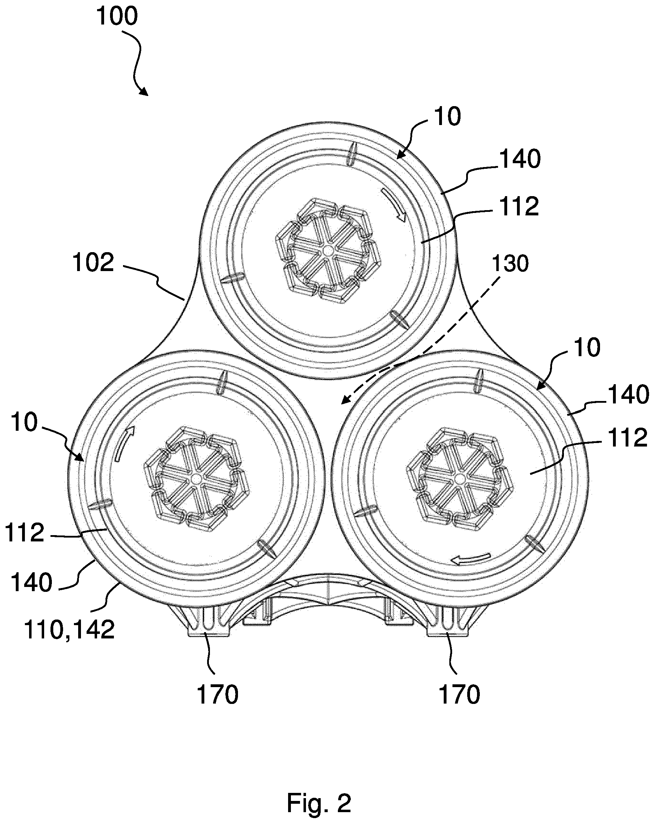

Fig. 1 depicts an ion exchanger filter device 100, in particular for a fuel cell system, according to embodiments in isometric view. Fig. 2 shows a top view of the ion exchanger filter device 100.

The ion exchanger filter device 100 comprises a housing 102 with a central tube 130 extending in an axial direction 80. Further the housing 102 comprises three receiving compartments 140, each enclosing an ion exchanger cartridge 10. The three receiving compartments 140 are arranged circumferentially and in fluid connection with the central tube 130. Thus, the housing 102 is triangular shaped the three compartments 140 being arranged side by side in a closest way, as may particularly be seen from Fig. 2.

The ion exchanger filter device 100 further comprises a connector 150 in fluid connection to a central opening 114 of the housing 102, comprising an inflow opening 104 and an outflow opening 106 for a medium to be filtered.

Further, mounting means 170 are provided at a wall 142 of two compartments 140 for easy mounting the ion exchanger filter device 100 to some machinery.

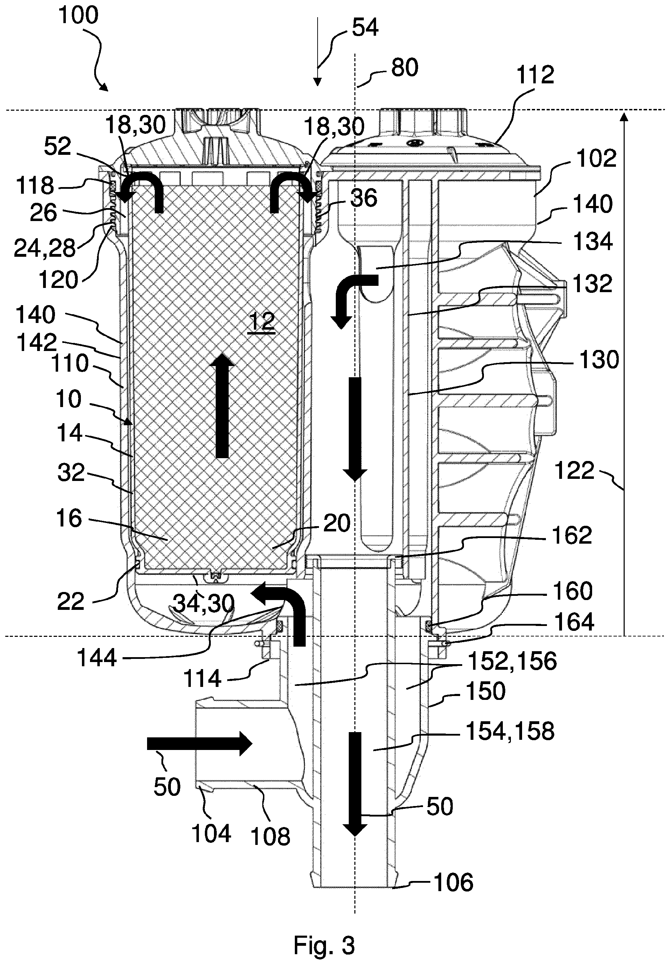

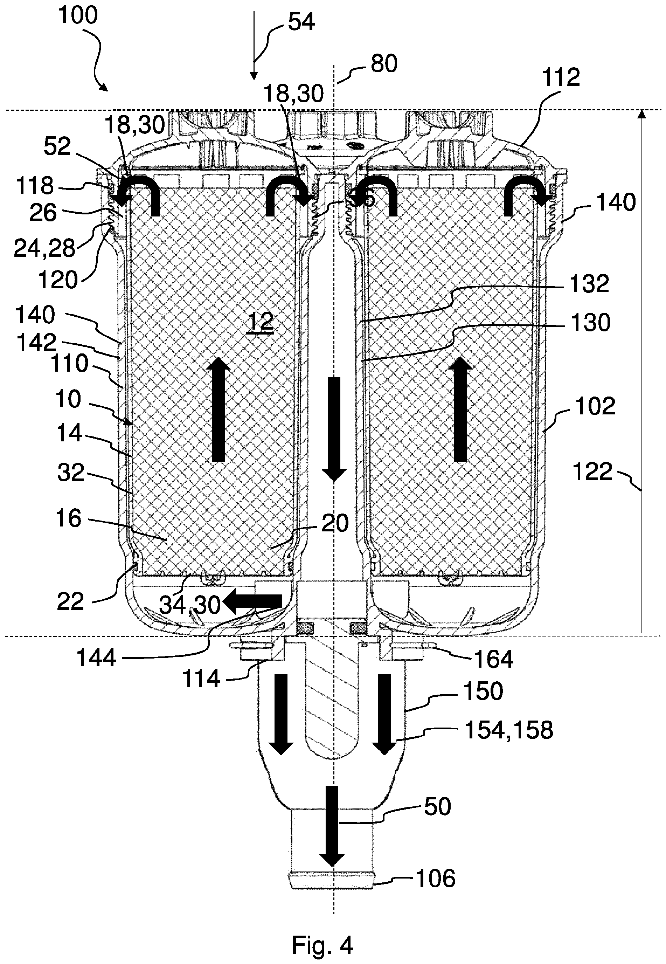

In Fig. 3 a sectional view of the ion exchanger filter device 100 is depicted with one ion exchanger cartridge 10 shown in a sectional view, whereas in Fig. 4 another sectional view of the ion exchanger filter device 100 is depicted with two ion exchanger cartridges 10 shown in a sectional view.

Each of the ion exchanger cartridges 10 comprises a cartridge container 14 with a circumferentially extending wall 32 enclosing a receptacle 16 filled with an ion exchanger material 12. The wall 32 comprises one or more outflow ports 18 distributed at or about a circumference of the circumferentially extending wall 32. The cartridge container 14 may be manufactured with insert-molded screen fabric 30, wherein the screen fabric 30 covers the inflow port 34 as well as the outflow port 18 of the ion exchanger cartridge 14.

Further, each of the ion exchanger cartridges 10 comprises a cover 112 configured as one piece together with the circumferentially extending wall 32 or connected with form fit or material fusion to the circumferentially extending wall 32. The cover 112 is configured as a cover of the housing 102 of the ion exchanger filter device 100 configured to receive the ion exchanger cartridge 10.

The ion exchanger cartridge 10 comprises at the lower axial end region 20 facing away from the outflow ports 18 a circumferentially extending seal 22, in particular a circumferentially extending seal, e.g. an O-ring, that seals substantially in radial direction, which serves for sealing at the inner side of the jacket wall 110 of the housing 102.

The cover 112 comprises an overlap region 24 overlapping in an axial direction 80 the one or more outflow ports 18 and forming an annular gap 26.

The overlap region 24 is embodied as a connection section 28 configured to connect the ion exchanger cartridge 10 to the housing 102 of the ion exchanger filter device 100.

Advantageously, the connection section 28 is a thread section 36, wherein the thread section 36 comprises an outer thread for being mounted to the counter thread 120 of the compartment 140. A radial seal 118, e.g. an O-ring, is provided for sealing between cover 112 and compartment 140.

The connector 150, which is mounted to the central opening 114 of the housing 102 and comprises the inflow opening 104 and the outflow opening 106 for the medium, provides concentric inflow and outflow channels 152, 154 of the medium to and from the housing 102. The connector 150 is in fluid connection to the central opening 114 of the housing 102.

The medium, symbolized by black arrows as a flow path 50, flows through the at least two ion exchanger cartridges 10 in parallel by entering the housing 102 through the inflow opening 104 of the inflow socket 108 at the connector 150. Then the medium flows through the inflow channel 152 of the connector 150, through the inflow port 144 of one of the compartments 140.

The inflow channel 152 of the connector 150 is in fluid connection to the inflow ports 144 of a wall 142 of the at least two receiving compartments 140.

The medium enters the ion exchanger cartridge 10 through an inflow port 34 at a lower end 20 of the cartridge 10 streaming through the ion exchanger material 12 of the cartridge 10 inside the receptacle 16 of the cartridge container 14. Then the medium leaves the cartridge 10 at the other end through the outflow port 18 streaming into the angular gap 26 around the cartridge 10 and enters the central tube 130 through the outflow port 134.

The outflow ports 18, in relation to a direction of gravity 54 in an intended mounting position of the ion exchanger filter device 100, are arranged in the axial direction 80 above the at least one outflow opening 106.

Thus, the flow path 50 comprises at least one deflection 52 downstream of the outflow ports 18 of the inflow opening 104.

The outflow ports 134 are arranged in a wall 132 of the central tube 130 as a fluid connection of the at least two receiving compartments 140 with the central tube 130. Favorably, the outflow port 134 may be arranged in an upper third of the housing height 122.

The medium then leaves the central tube 130 and the housing 102 through the outflow channel 154 of the connector 150 and the outflow opening 106.

For this purpose, the outflow channel 154 of the connector 150 is in fluid connection to the central tube 130.

Thus, the flow path 50 of the medium established through each of the ion exchanger cartridges 10 has approximately the same length from the at least one inflow opening 104 through the inflow channel 152 of the connector 150 through the ion exchanger cartridges 10 to the central tube 130 and the at least one outflow opening 106.

As may be seen from Fig. 3, the inflow channel 152 and the outflow channel 154 are arranged as concentric pipes 156, 158, wherein the inflow channel 152 is in fluid connection to the inflow opening 104 and the outlet channel 154 is in fluid connection to the outflow opening 106.

The connector 150 is removable from the central opening 114 of the housing 102. For mounting the connector 150 is inserted into the central opening 114 of the central tube 130 of the housing 102.

As may be seen from Fig. 3, the connector 150 is sealed to the central opening 114 of the housing 102 by a first circumferentially extending seal 160, e.g. an O-ring, for sealing in radial direction.

As may be seen from Fig. 4, the connector 150 is sealed to the central tube 130 by a second circumferentially extending seal 162, e.g. a gasket, for sealing in radial direction.

The connector 150 is fixed to the central opening 114 of the housing 102 by an at least partly circumferentially extending retaining spring 164.

In the sectional view in Fig. 4, only the outflow channel 154 of the connector 150 are to be seen.

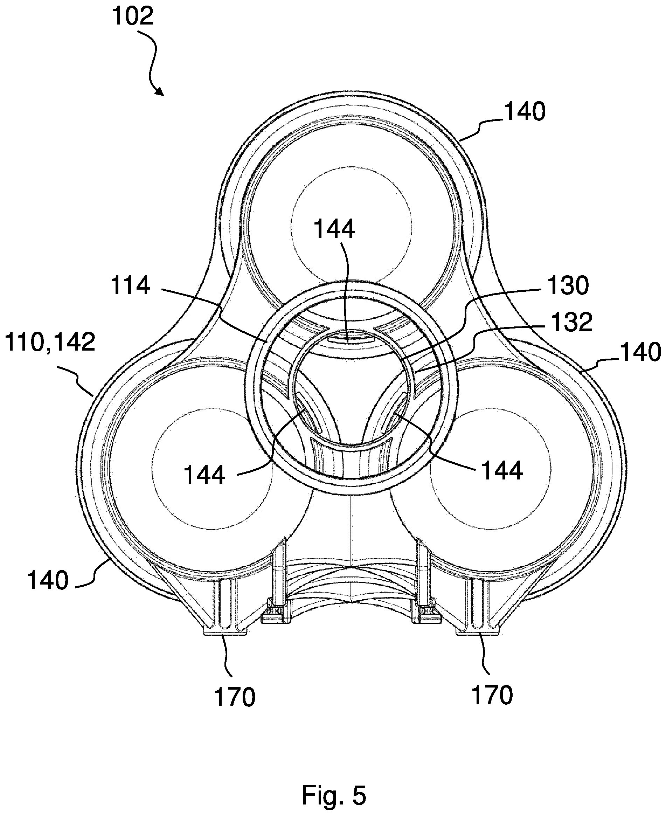

Fig. 5 depicts a bottom view of the housing 102 of the ion exchanger filter device 100.

Here the triangular shape of the housing 102 with the three compartments 140 is to be seen with a view through the central opening 114 of the housing 102 into the inside. By this way, the inflow ports 144 in the wall 132 of the central tube 130 for medium flow from the ion exchanger cartridges 10 to the central tube 130 are to be seen.

### Reference Signs List

- 10: ion exchanger cartridge
- 12: ion exchanger material
- 14: cartridge container
- 16: receptacle
- 18: outflow port
- 20: lower end region
- 22: seal
- 24: overlap region
- 26: gap
- 28: connection section
- 30: screen fabric
- 32: wall
- 34: inflow port
- 36: thread section
- 50: flow path
- 52: deflection
- 54: direction of gravity
- 80: axial direction
- 100: ion exchanger filter device
- 102: housing
- 104: inflow opening
- 106: outflow opening
- 108: inflow socket
- 110: jacket wall
- 112: cover
- 114: central opening
- 118: seal
- 120: counter thread
- 122: housing height
- 130: central tube
- 132: wall
- 134: outflow port
- 140: receiving compartment
- 142: wall
- 144: inflow port
- 150: connector
- 152: inflow channel
- 154: outflow channel
- 156: pipe
- 158: pipe
- 160: seal
- 162: seal
- 164: retaining spring
- 170: mounting means

## Claims

1. An ion exchanger filter device (100), in particular for a fuel cell system, ion exchanger filter device (100) comprising
a housing (102) comprising:
a central tube (130) extending in an axial direction (80); and
at least two receiving compartments (140) respectively enclosing at least two ion exchanger cartridges (10), the at least two receiving compartments (140) being arranged circumferentially and in fluid connection with the central tube (130), each of the at least two ion exchanger cartridges (10) comprising a cartridge container (14) with a circumferentially extending wall (32) enclosing a receptacle (16) filled with an ion exchanger material (12), and the circumferentially extending wall (32) comprising one or more outflow ports (18) distributed at or about a circumference of the circumferentially extending wall (32); and
a connector (150) comprising at least one inflow opening (104) and at least one outflow opening (106) for a medium, the connector (150) being in fluid connection to a central opening (114) of the housing (102),
wherein the medium flows through the at least two ion exchanger cartridges (10) in parallel, and
wherein a flow path (50) of the medium through each of the at least two ion exchanger cartridges (10) has approximately the same length from the at least one inflow opening (104) through the ion exchanger cartridges (10) to the central tube (130) and the at least one outflow opening (106).

2. The ion exchanger filter device according to claim 1, wherein the central tube (130) comprises outflow ports (134) arranged in a wall (132) of the central tube (130) as a fluid connection of the at least two receiving compartments (140) with the central tube (130).

3. The ion exchanger filter device according to claim 1 or 2, wherein the connector (150) further comprises a concentric inflow channel (152) and a concentric outflow channel (154) for the medium to and from the housing (102).

4. The ion exchanger filter device according to claim 3, wherein the concentric outflow channel (154) is in fluid connection to the central tube (130),
wherein the at least two receiving compartments (140) comprises inflow ports (144) arranged in a wall (142) of the at least two receiving compartments (140), and
wherein the concentric inflow channel (152) is in fluid connection to the inflow ports (144).

5. The ion exchanger filter device according to claim 3, wherein the concentric inflow channel (152) and the concentric outflow channel (154) are arranged as concentric pipes (156, 158),
wherein the concentric inflow channel (152) is in fluid connection to the at least one inflow opening (104), and
wherein the concentric outflow channel (154) is in fluid connection to the at least one outflow opening (106).

6. The ion exchanger filter device according to any one of the preceding claims, wherein the connector (150) is removable from the central opening (114) of the housing (102), and
wherein the connector (150) is sealed to the central opening (114) of the housing (102) by a first circumferentially extending seal (160), and/or is sealed to the central tube (130) by a second circumferentially extending seal (162).

7. The ion exchanger filter device according to any one of the preceding claims, wherein the connector (150) is fixed to the central opening (114) of the housing (102) by an at least partly circumferentially extending retaining spring (164).

8. The ion exchanger filter device according to any one of the preceding claims, wherein the flow path (50) comprises at least one deflection (52) downstream of the one or more outflow ports (18) of the least one inflow opening (104).

9. The ion exchanger filter device according to any one of the preceding claims, wherein the one or more outflow ports (18), in relation to a direction of gravity (54) in an intended mounting position of the ion exchanger filter device (100), are arranged in the axial direction (80) above the at least one outflow opening (106).

10. An ion exchanger cartridge (10) for the ion exchanger filter device (100) according to any one of the preceding claims, the ion exchanger cartridge (10) comprising:
the cartridge container (14) comprising the circumferentially extending wall (32) enclosing the receptacle (16) filled with the ion exchanger material (12), the circumferentially extending wall (32) comprising the one or more outflow ports (18) distributed at or about the circumference of the circumferentially extending wall (32); and
a cover (112) configured as one piece together with the circumferentially extending wall (32) or connected with form fit or material fusion to the circumferentially extending wall (32), the cover (112) being configured to cover of the housing (102) of the ion exchanger filter device (100) configured to receive the ion exchanger cartridge (10), and the cover (112) comprising an overlap region (24) overlapping in the axial direction (80) the one or more outflow ports (18) and forming an annular gap (26),
wherein the flow path (50) of the medium through the ion exchanger cartridge (10) comprises a deflection (52) within the annular gap (26) downstream of the one or more outflow ports (18).

11. The ion exchanger cartridge according to claim 10, wherein the overlap region (24) is embodied as a connection section (28) configured to connect the ion exchanger cartridge (10) to the housing (102) of the ion exchanger filter device (100), the connection section (28) being a thread section (36).
